Europäisches Patentamt

European Patent Office

Office européen des brevets

(19)

(11) Numéro de publication : **0 321 341 B1**

(12) **FASCICULE DE BREVET EUROPEEN**

(45) Date de publication du fascicule du brevet :
16.10.91 Bulletin 91/42

(51) Int. Cl.⁵ : **F16L 27/04**

(21) Numéro de dépôt : **88403184.0**

(22) Date de dépôt : **14.12.88**

(54) **Dispositif pour fixation de tubes traversant une paroi.**

(30) Priorité : **17.12.87 FR 8717655**

(43) Date de publication de la demande :
**21.06.89 Bulletin 89/25**

(45) Mention de la délivrance du brevet :
**16.10.91 Bulletin 91/42**

(84) Etats contractants désignés :
**AT BE CH DE ES FR GB GR IT LI LU NL SE**

(56) Documents cités :
**AT-B- 265 773
DE-A- 2 435 976
DE-U- 1 988 015
FR-A- 2 181 117
FR-A- 2 287 640
US-A- 2 983 528**

(73) Titulaire : **ATOCHEM
4 & 8, Cours Michelet La Défense 10
F-92800 Puteaux (FR)**

(72) Inventeur : **Masini, Jean-Jacques
35, Rue Jean Penet
F-69630 Chaponost (FR)**
Inventeur : **Chapidon, René
29, Avenue des Pépinières Clos-Rival
F-69230 Saint-Genis-Laval (FR)**

(74) Mandataire : **Leboulenger, Jean et al
ATOCHEM Département Propriété Industrielle
F-92091 Paris la Défense 10 Cédex 42 (FR)**

Jouve, 18, rue Saint-Denis, 75001 PARIS

## Description

La présente invention concerne la fixation étanche d'un tube de section essentiellement circulaire traversant la paroi d'une capacité. L'invention est particulièrement utile pour pouvoir disposer des tubes en verre ou en quartz dans un réacteur de chloration radicalaire fonctionnant sous pression, ces tubes devant contenir des émetteurs ultra-violet (U.V.).

Des procédés industriels utilisant des réacteurs photochimiques sont décrits par exemple dans le brevet européen EP 128818 ainsi que dans le brevet américain US 4.689.130. On a déjà décrit dans le brevet US.3.998.477 un dispositif général de fixation d'un tube sur une tubulure d'une capacité. Le dispositif décrit est particulièrement adapté à la fixation d'un tube en quartz contenant un émetteur U.V. sur un réacteur de photochloration. Ce dispositif permet de disposer par exemple des tubes en quartz de 60 mm de diamètre et 3 m de long dans un réacteur de synthèse de chlorométhanes fonctionnant à une pression de 15 bars. Ce dispositif permet une fixation étanche du tube en quartz tout en autorisant de légers mouvements du tube. Si les turbulences dans le réacteur sont très importantes ou si les tubes sont très longs, il peut se produire des ruptures de tubes ou des pliages si le tube est en acier, ces contraintes conduisent souvent à des déformations permanentes des joints à lèvres assurant l'étanchéité et des joints toriques en tête du tube à l'extérieur du réacteur.

La demanderesse a maintenant trouvé un nouveau dispositif pour fixer de façon étanche un tube traversant la paroi d'une capacité et pouvant supporter les importantes contraintes mécaniques dues à un milieu liquide turbulent, et à l'effort résultat de la pression intérieure de la capacité sur la section du tube.

La présente invention concerne la fixation étanche d'un tube de section essentiellement circulaire traversant la paroi d'une capacité dans lequel l'extrémité du tube à l'extérieur de la capacité forme, en liaison avec une pièce en matériau souple, un joint à rotule et que l'étanchéité du passage du tube à travers la paroi de la capacité est assurée par au moins un joint souple.

L'invention concerne un tube en matériau quelconque et de dimension quelconque. Le tube peut être par exemple en verre, en quartz, en graphite, ou à base de polymères tels que le polytétrafluoréthylène, le polypropylène, le polychlorure de vinyle, ou encore à base de métaux ou d'alliages tels que de l'acier, de l'acier plaqué, de l'acier inoxydable, du nickel, du cuivre ou du monel. Le tube peut être plein ou creux.

L'invention est particulièrement utile pour les tubes fragiles tels qu'en verre ou en quartz, comme ceux qu'on utilise pour disposer des émetteurs U.V. dans un réacteur photochimique.

Bien que l'invention concerne des tubes de toutes tailles, elle est habituellement mise en oeuvre avec des tubes de diamètre compris entre 30 et 300 mm et de longueur entre 1 et 6 m. Ces tubes peuvent être en quartz ou en verre et sont creux pour pouvoir y disposer des lampes d'émission U.V. et si nécessaire un dispositif de refroidissement. Le tube est presque entièrement dans la capacité et l'extrémité à l'extérieur de la capacité présente la forme d'une sphère centrée sur l'axe de symétrie longitudinal du tube et dont le rayon est supérieur au rayon extérieur du tube. Autour de cette partie sphérique du tube se trouve une pièce en matériau souple, l'ensemble forme une rotule et permet une légère rotation du tube autour du centre de la sphère pour absorber les vibrations et surtout permet le maintien du tube en s'opposant à l'effet de fond sur la section du tube. Comme matériau souple on utilise les matériaux habituels pour les joints, à savoir les caoutchouc naturels ou de synthèse, des polymères fluorés, chlorofluorés, des copolymères éthylène propylène.

La capacité sur laquelle on fixe le tube peut être par exemple un réservoir, un réacteur chimique, une colonne de distillation. L'invention est particulièrement utile dans le cas de capacités sous pression ou sous vide. Un système quelconque permet de solidariser la capacité et la pièce en matériau souple autour de la rotule. Ce système quelconque est par exemple un cylindre creux partiellement obturé à une extrémité et dont l'autre extrémité vient s'adapter sur la tubulure de la capacité par laquelle le tube pénètre dans la capacité.

L'étanchéité du passage du tube à travers la paroi de la capacité est assurée par au moins un joint souple. La nature du joint est déterminée par la nature chimique des réactifs chimiques devant être présents dans la capacité et qui sont en contact avec le joint. On utilise par exemple du caoutchouc naturel ou synthétique ou des polymères de synthèse tels que des polymères fluorés, chlorofluorés, des copolymères éthylène propylène... On préfère utiliser un joint dit "joint à lèvres". Selon une autre forme préférée de l'invention, on utilise 2 joints à lèvres. On entend par joints à lèvres tout joint du type présentant une zone de contact ou deux zones de contact séparées par une zone centrale vide. Ce type de joint peut aussi avoir une forme telle que la pression du fluide qu'on veut retenir appuie le joint sur la surface de contact, renforçant ainsi l'étanchéité. Ce joint peut comporter une âme métallique ou un matériau de synthèse et donnant l'élasticité, et le tout est recouvert de matière souple du type caoutchouc ou élastomère de synthèse.

Selon une autre forme préférée de l'invention, on utilise une rotule partielle, c'est-à-dire une rotule qui ne permet pas une rotation complète mais sur moins de 15°. La sphère précédente n'est donc pas complète et se présente comme le reste de la sphère précédente limitée par un cylindre dont l'axe est confondu avec l'axe du tube et dont le rayon est inférieur au rayon de la sphère et supérieur au rayon extérieur du tube. On obtient ainsi un tube avec une sorte de bulbe à une extrémité, ce bulbe comportant deux secteurs symétriques par rapport à un plan de symétrie de la sphère initiale, ledit plan de symétrie étant perpendiculaire à l'axe de symétrie longitudinal du tube. Dans cette forme préférée, la pièce en matériau souple qui forme rotule avec le reste de sphère, se réduit à deux joints en matériau souple qui s'appliquent contre les secteurs sphériques du reste de la sphère.

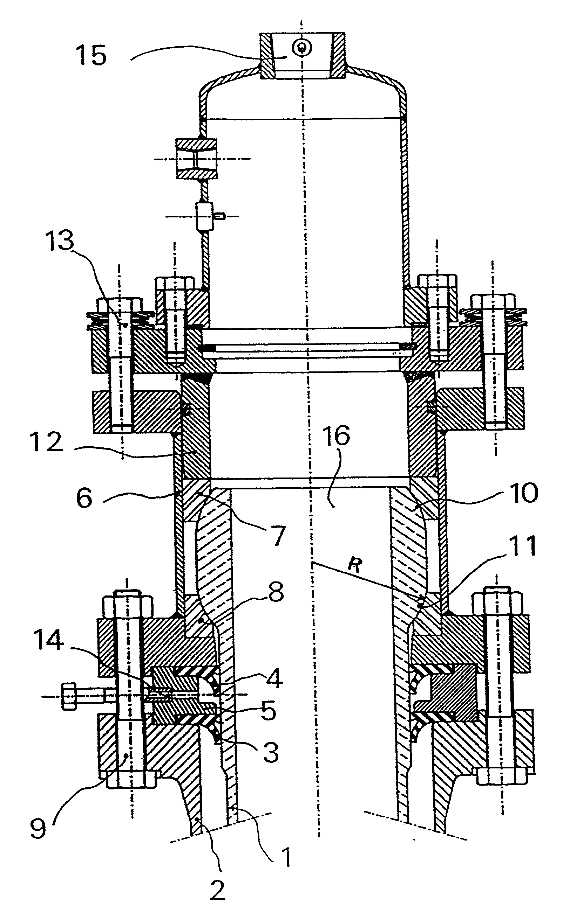

La planche unique représente une forme particulière de l'invention. Le tube 1 est fixé sur la tubulure 2 de la capacité. 3 et 4 représentent 2 joints à lèvres et 5 est une cale pour positionner et maintenir ces 2 joints à lèvres. 6 est une pièce mécano soudée qui est solidarisée à la tubulure de la capacité par des boulons (9). Les deux joints 7 et 8 représentent la pièce en matériau souple qui forment avec les secteurs sphériques 10 et 11 une rotule. R représente le rayon de la sphère. Le tube présente une ouverture 16 pour y introduire les émetteurs U.V. et leur dispositif de refroidissement si nécessaire. La pièces 12 avec l'aide des boulons 13 permet de régler et de serrer les joints 7 et 8. Un orifice 14 entre les deux joints à lèvres et qu'on peut obturer par une vis, permet de savoir si le premier joint à lèvres 3 présente une fuite. L'orifice 15 permet l'alimentation électrique de la lampe U.V. qui est dans le tube 1. On n'a pas représenté le système de bouchage de l'orifice 15 qui évite de vider le contenu de la capacité en cas de rupture du tube 1.

Les joints 7 et 8 permettent donc de maintenir le tube 1, en résistant à l'effet de fond du à la pression à l'intérieur de la capacité sur la section du tube. Ces joints 7 et 8 permettent une légère rotation du tube autour du centre de symétrie de la sphère partielle formant bulbe à l'extrémité du tube, cette rotation est limitée par les joints à lèvres 3 et 4. Bien que la rotation soit limitée, elle est suffisante pour éviter les ruptures dues aux turbulences du milieu liquide à l'intérieur de la capacité.

## Revendications

1. Fixation étanche d'un tube de section essentiellement circulaire traversant la paroi d'une capacité dans lequel :
    — l'extrémité (10, 11) du tube à l'extérieur de la capacité forme, en liaison avec une pièce (7) en matériau souple, un joint à rotule,
    — l'étanchéité du passage du tube à travers la paroi de la capacité est assurée par au moins un joint souple (3, 4).

2. Fixation selon la revendication 1, caractérisé en ce que le joint souple est un joint à lèvres.

3. Fixation selon la revendication 1 ou 2, caractérisé en ce que la rotule est partielle et est formée par l'extrémité du tube de forme sphérique dont le centre est sur l'axe de symétrie longitudinal du tube et est limitée par un cylindre dont l'axe est confondu avec l'axe du tube et dont le rayon est inférieur au rayon de la sphère et supérieur au rayon extérieur du tube, cette sphère partielle étant en contact avec 2 joints souples.

4. Fixation selon l'une des revendications 1 à 3, caractérisé en ce que le tube contient des émetteurs ultra-violets.

## Patentansprüche

1. Dichtende Befestigung eines durch die Wandung eines Behälters führenden Rohres mit im wesentlichen kreisförmigem Querschnitt, bei der :
    — das sich außerhalb des Behälters befindende Ende (10, 11) des Rohres in Verbindung mit einem Teil aus flexiblem Material eine Kugelgelenkverbindung bildet,
    — die Dichtheit der Rohrdurchführung durch die Behälterwandung durch zumindest eine flexible Dichtung (3, 4) sichergestellt ist.

2. Befestigung nach Anspruch 1, dadurch gekennzeichnet, daß die flexible Dichtung eine Lippendichtung ist.

3. Befestigung nach Anspruch 1 oder 2, dadurch gekennzeichnet, daß die Kugelgelenkverbindung teilkugelig ist und durch das Rohrende in Kugelform gebildet ist, deren Mittelpunkt auf der Symmetrielängsachse des Rohres liegt, und durch einen Zylinder begrenzt ist, dessen Achse mit der Rohrachse zusammenfällt und dessen Radius kleiner als der Kugelradius und größer als der Rohraußenradius ist, wobei die Teilkugel in Kontakt mit zwei flexiblen Dichtungen ist.

4. Befestigung nach einem der Ansprüche 1 bis 3, dadurch gekennzeichnet, daß das Rohr Ultraviolettstrahler aufnimmt.

## Claims

1. Impermeable fixing of a tube of essentially circular cross-section which passes through the wall of a vessel in which :
    — the end (10, 11) of the tube outside the vessel, combined with a component (7) made of flexible material, forms a ball-and-socket joint,
    — the impermeability of the junction between the tube and the wall of the vessel is ensured by at least one flexible seal (3, 4).

2. Fixing according to Claim 1, characterised in that the flexible seal is a lip seal.

3. Fixing according to one of Claims 1 and 2, characterised in that the ball-and-socket joint is partial and is formed by the end of the tube having a shape which is spherical, the centre of which is on the longitudinal axis of symmetry of the tube and is delineated by a cylinder the axis of which is common with the axis of the tube and the radius of which is less than the radius of the sphere and greater than the external radius of the tube, this partial sphere being in contact with 2 flexible seals.

4. Fixing according to any one of Claims 1 to 3, characterised in that the tube contains ultraviolet emitters.